# EUROPEAN PATENT APPLICATION

(11) **EP 1 489 057 A1**
(43) Date of publication of application: **22.12.2004**
(21) Application number: 03425400.3
(22) Date of filing: 20.06.2003
(51) Int. Cl.: C04B 28/02, E01C 11/18

(54) **Concrete for paving**

(71) Applicant: Global Engineering and Trade S.r.L., 20121 Milano (IT)
(72) Inventor: Terruzzi, Claudio, 5020 Salzburg (AT)
(74) Representative: Lunati, Vittoriano

(57) **Abstract**

A concrete material for paving is provided which consists of a mix (1) comprising: a cement material in an amount substantially included between two hundred and fifty and four hundred and fifty kilos per cubic metre; a ratio by weight of water to cement maintained substantially equal to or lower than 0.35, to form a viscous mixture (3); an aggregate having a major portion by weight embodied by a big aggregate (2) obtained by crushing of stony material and having substantially homogeneous dimensions; and a glass yam (5) of the AR type resisting to alkali and textured in the form of continuous filaments; so that in the mix (1) a microreinforcement and a wide homogeneously-distributed porosity (4) are formed.

## Description

The invention relates to a concrete material for paving, of the type pointed out in the preamble of Claim 1.

It is known that pavings for roads adapted to be travelled over by motor-vehicles are made of a bituminous mix usually referred to as asphalt, or - alternatively - of a cement mix currently referred to as concrete.

Concrete generally has several advantages as compared with a bituminous mix: in towns it is more integrated with the surrounding buildings, from an aesthetic and architectonic point of view, it has a great versatility of shapes, colours and surface finish and shows features of high strength and duration in time. It is therefore suitable both for town roads and long-distance roads outside the town.

The high resistance to efforts and wear and the resistance to freezing, as well as the fact that they do not soften in the presence of relatively high temperatures, combined with a long duration and a reduced need for servicing, make pavings of concrete material adapted for airport runways and in general for surfaces - such as those of bridges or roundabouts - where the qualitative level is required to be high.

Another important quality of the concrete material as compared with bituminous mixes, resides in that for finish of a road surface, on an already prepared road bed, a single passage and a single layer can be sufficient, whereas with a bituminous mix three passages and three layers are necessary on an average.

It is also important to point out that while laying of a bituminous mix is an operation depending on the environmental conditions, because the bitumen temperature during laying off must keep very high, concrete can be laid off substantially in the presence of any environmental condition.

In addition, the bituminous mix is a relatively polluting product and, as such, there are more difficulties for disposal thereof.

Beside the above listed qualities, concrete material for paving has some drawbacks.

From an economic point of view, concrete has higher total costs than a bituminous mix.

In addition, concrete is submitted to shrinkage phenomena on hardening, which gives rise to cracks and fissures.

Moreover, an inner metal netting or reinforcement is required to be buried in the concrete and also the paving must be provided with expansion joints practically defined by gaps between compact clods.

As a consequence of the arrangement of expansion joints and above all of the presence of a reinforcement, costs and times for laying of a concrete pavement are relatively high.

If the reinforcement is increased, the expansion joints can be greatly spaced apart from each other and even eliminated, but costs and times for laying of the metal reinforcement are increased.

A drawback in pavings in general and in pavings made of concrete material in particular is represented by the reduced draining capability of same: they are not very permeable to water from rainfall and on the contrary, the more they are strong and tough, the more they are compact and impervious to water.

Practically, for discharging the water from rainfall and facilitate the traffic on a wet surface, the following expedients are used: formation of offlets, a great surface roughness and a convex conformation of the road surface to enable discharging of the wafer present on the roads to the sides of the roads themselves.

However this type of drainage can be only used in a very limited manner, in order not to introduce too many unevennesses on the road surface and because the road convexity must be reduced to avoid the roads becoming dangerously slippery towards their sides.

Therefore there is no drainage that is really satisfactory and adapted to difficutt climatic conditions and a person driving a motor-vehicle in the presence of a downpour and/or of sleet must drive under conditions of poor visibility also due to sprinkling of water generated by other near vehicles and to a partial loss of grip by the wheels.

Under this situation the technical task underlying the present invention is to device a concrete material for pavings that can remedy the mentioned drawbacks at least partly and therefore has improved features as compared with those of known concrete.

Within the scope of this technical task it is an important aim of the invention to devise a concrete material having a high draining capability, so as to enable a safer drive in the presence of rain and/or sleet.

Another important aim is to devise a concrete material having features of more advantageous costs and still better quality as compared with bituminous mixes. The technical task mentioned and the aims specified are achieved by a concrete for pavings as claimed in the appended claim 1.

Preferred embodiments are set out in the sub-claims.

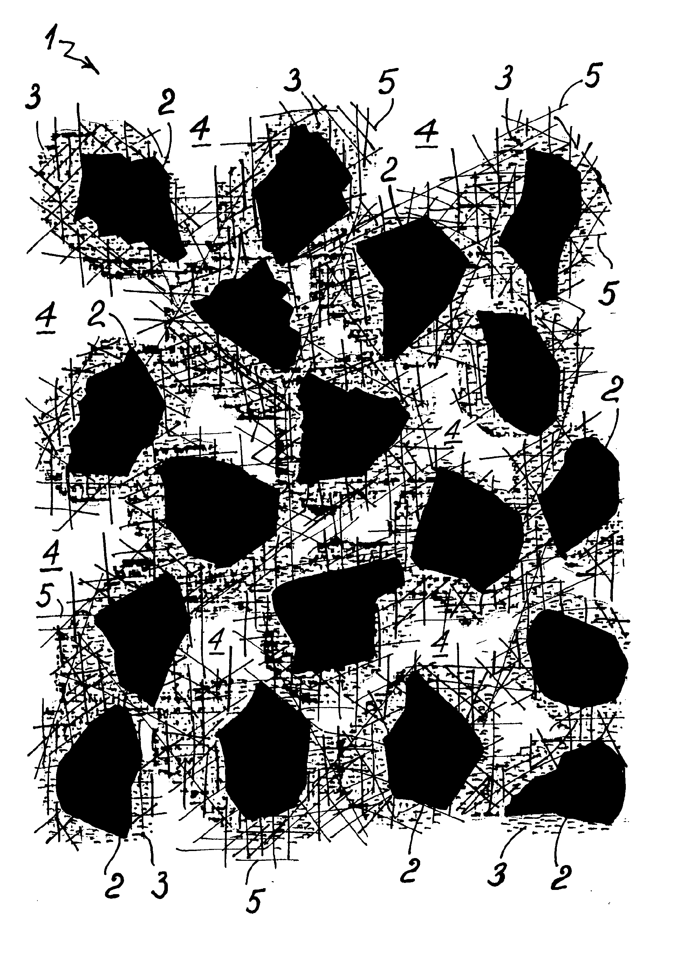

A detailed description of a preferred embodiment of the invention is now given hereinafter with the aid of the accompanying drawing sheet, in which:
- **the only figure** diagrammatically shows the structure of the new concrete to an enlarged scale.

With reference to the figure, the concrete material comprises a mix 1 including at least cement, aggregate, water.

In a first aspect of the invention cement is included in amounts substantially ranging between two hundred and fifty and four hundred and fifty kilos per cubic metre and preferably between three hundred and fifty and four hundred kilos per cubic metre.

Cement is of a type known by itself, as defined by UNI EN 199-1 197-2, for example.

In addition, the ratio by weight of water to cement is maintained substantially equal to or lower than a value of 0.35 and preferably included between 0.27 and 0.34.

Said water/cement ratio is qualifiable as low or very low since this ratio - in already known concrete materials for pavings - typically oscillates in the neighbourhood of 0.50, being included between a minimum of 0.40 and a maximum of 0.55, for example.

As a result of the above, mix 1 appears very viscous and not very fluid.

In the conditions pointed out in the following, the last-mentioned feature too surprisingly appears to be a quality.

To compensate for the reduced fluidity and promote the necessary workability of the mix without adding water, provision is made for addition thereto of at least one fluidizing additive of the type having a pozzolanic activity. Pozzolanas are pyroclastic rocks, practically volcanic tuffs consisting of very small granules.

The fluidizing additive is provided in an amount substantially equal to or smaller than 10% by weight of the cement amount and is selected from those known in the cement field. It may consist of a so-called superfluidizing agent or a multicomponent powdered additive based on superfluidizing agents. It may be based on naphthalene and/or melamine and/or acrylic products. It is herein mentioned the known RHEOBUILD ®TDS only by way of example and for completeness.

Other additives of different types can be added, such as accelerating agents, retarders, air-entraining agents, pigments, etc.

In another aspect of the invention, at least one major portion by weight of the aggregate consists of a big aggregate **2** obtained by crushing of stony material.

The aggregate is of the crushed or splintered type to give the same an uneven shape as much as possible, which is advantageously suitable in accordance with the invention.

In more detail the big aggregate 2 substantial embodies at least 80% by weight of the whole aggregate and it may even embody 100% of the aggregate.

The big aggregate 2 has well defined particle sizes: each element has its maximum linear dimension - the decisive one in case of riddling - bigger than five millimetres.

In addition, the big aggregate 2 is chosen with selected and substantially homogeneous dimensions: each element has a maximum linear dimension not only bigger than five millimetres, but also included between a maximum value and a minimum value, and the maximum value and minimum value diverge less than 50% from a suitable predetermined average value.

By way of example it is pointed out that if the big aggregate 2 is selected from porphyries, limestone, basalts and the like, a particle size having an average value of about twelve millimetres can be selected, with the individual elements having the maximum linear dimensions preferably included between eight and fifteen millimetres.

Alternatively, an average value of about thirteen millimetres can be selected and in this case the particle size of the aggregate may have maximum linear dimensions preferably included between ten and sixteen millimetres.

If the big aggregate 2 is selected from siliceous materials such as quartz, tridymites, cristobalites and the like, an average value of about 16 or 17 millimetres may be provided and in this case the particle size of the big aggregate 2 may have maximum linear dimensions preferably included between about eight and about twenty-five millimetres.

The homogeneous and important particle size of the big aggregate 2 as well as the uneven shape of same due to the fact that it is obtained by crushing, are advantageous because they give rise more easily to voids, cavities, passages, apertures, pits passing through mix 1, contrary to what is usually required from concrete materials.

In particular, the homogeneous particle size prevents the big aggregate 2 from compacting and this feature is safeguarded in an original manner also in case of possible presence of other aggregate, which on the other hand is provided in a minimum amount and substantially equal to or lower than 20% by weight of the overall aggregate.

In fact, this possible further minimum amount of further aggregate must have linear dimensions equal to or lower than two millimetres and it preferably consists of mere sand.

In this way the sand, or the aggregate equivalent thereto, keeps mixed and joined to the cement and does not constitute a partly independent filling material, like the big aggregate

On the contrary, it is part of a mixture **3** consisting of cement, fluidizing additive, sand and water having the above stated features of high viscosity and, as such, tending to adhere to the big aggregate 2, as shown in the figure, leaving therefore wide spaces or porosities **4** within the mix 1.

For better defining, from a quantitative point of view, the different components hitherto indicated and the porosity level 4 obtained, some non-limiting examples of the concrete material in accordance with the invention are reproduced hereinafter with reference to the concrete content by weight of: cement, big aggregate 2 (without humidity), sand (without humidity), water (possibly included the water from the aggregates), water/cement ratio, fluidizing additive.

Also the wet density of the concrete material is indicated. This value is wet-measured, i.e. with a green jet, and is very useful to ensure exactitude of the laying off procedure.

It is also pointed out that in all examples the big aggregate 2 is selected with a particle size having maximum linear dimensions included between eight and fifteen millimetres.

### EXAMPLE 1:

| | | |
|---|---|---|
| - Cement: | kg/m³ | 373 |
| - Big aggregate (8-15): | kg/m³ | 1410 |
| - Sand: | kg/m³ | 115 |
| - Water: | kg/m³ | 128.5 |
| - Fluidizing additive: | kg/m³ | 8 |
| - Wet density of concrete: | kg/m³ | 2034 |
| *- Water*/*cement ratio:* | | *0.344* |
| *- Obtained porosity* | | *24%* |

### EXAMPLE 2:

| | | |
|---|---|---|
| - Cement: | kg/m³ | 375 |
| - Big aggregate (8-15): | kg/m³ | 1478 |
| - Sand: | kg/m³ | 82 |
| - Water: | kg/m³ | 125 |
| - Fluidizing additive: | kg/m³ | 7.5 |
| - Wet density of concrete: | kg/m³ | 2068 |
| *- Water*/*cement ratio:* | | *0.333* |
| *- Obtained porosity* | | *25%* |

### EXAMPLE 3:

| | | |
|---|---|---|
| - Cement: | kg/m³ | 370 |
| - Big aggregate (8-15): | kg/m³ | 1400 |
| - Sand: | kg/m³ | 82 |
| - Water: | kg/m³ | 100 |
| - Fluidizing additive: | kg/m³ | 1.5 |
| - Wet density of concrete: | kg/m³ | 2230 |
| *- Water*/*cement ratio:* | | *0.270* |
| *- Obtained porosity* | | *17%* |

### EXAMPLE 4:

| | | |
|---|---|---|
| - Cement: | kg/m³ | 365 |
| - Big aggregate (8-15): | kg/m³ | 1532 |
| - Sand: | kg/m³ | 121 |
| - Water: | kg/m³ | 105 |
| - Fluidizing additive: | kg/m³ | 1.64 |
| - Wet density of concrete: | kg/m³ | 2310 |
| *- Water*/*cement ratio:* | | *0.287* |
| *- Obtained porosity* | | *9%* |

### EXAMPLE 5:

| | | |
|---|---|---|
| - Cement: | kg/m³ | 370 |
| - Big aggregate (8-15): , | kg/m³ | 1546 |
| - Sand: | kg/m³ | 117 |
| - Water: | kg/m³ | 104 |
| - Fluidizing additive: | kg/m³ | 1.67 |
| - Wet density of concrete: | kg/m³ | 2240 |
| *- Water*/*cement ratio:* | | *0.281* |
| *- Obtained porosity* | | *13%* |

### EXAMPLE 6:

| | | |
|---|---|---|
| - Cement: | kg/m³ | 370 |
| - Big aggregate (8-15): | kg/m³ | 1543 |
| - Sand: | kg/m³ | 108 |
| - Water: | kg/m³ | 108 |
| - Fluidizing additive: | kg/m³ | 1.74 |
| - Wet density of concrete: | kg/m³ | 2120 |
| *- Water*/*cement ratio:* | | *0.291* |
| *- Obtained porosity* | | *15%* |

### EXAMPLE 7

| | | |
|---|---|---|
| - Cement: | kg/m³ | 380 |
| - Big aggregate (8-15): | kg/m³ | 1510 |
| - Sand: | kg/m³ | 133 |
| - Water: | kg/m³ | 108 |
| - Fluidizing additive: | kg/m³ | 1.71 |
| - Wet density of concrete: | kg/m³ | 2330 |
| *- Water*/*cement ratio:* | | 0.284 |
| *- Obtained porosity* | | 11% |

From the examples it clearly appears that the obtained porosity 4 is very wide and varies between 9% (Example 4) and 25% (Example 2) of the overall volume of mix 1. In any case it can be submitted to wide variations depending on the amounts of the different components.

The wet density of concrete varies in the Examples between 2034 (Example 1) and 2330 kg/m³ (Example 7) and it is provided that it may also be included between 1900 and 2400 kg/m³, depending on the component amounts.

In a further aspect of the invention, a further component is added to the components described in detail above, which further component is capable of having a decisive influence on the features of mechanical strength, cracking reduction and mix expansions, and is also capable of promoting a homogeneous arrangement of all components and of the porosity itself.

The concrete material for pavements in fact comprises a glass yarn of the AR type resisting to alkali and textured in continuous filaments.

This glass yarn is dispersed in the mix in the form of filaments and is identified with 5 in the figure.

In more detail, the glass yarn 5 is defined by filaments having a diameter of preferably about fourteen microns and any length, equal to or smaller than sixty millimetres, for example.

This yam due to its big diameter produces no dangers connected with breathing even if it is cut into small pieces and is of minimum length, based on the rules of the World Health Organisation.

Preferably the glass yarn 5 is that made by Saint-Gobain Vetrotex and produced with the trademark Cem-FIL® and presently used for construction of buildings and of several different elements made of cement.

The glass yarn 5 is provided in high amounts, even substantially equal to or lower than 50% by weight of cement. However, to limit costs, the yarn weight can be contained between 5% and 10% of the cement weight.

As shown in the figure, in a diagrammatic manner, the glass yarn 5 is dispersed so as to form a netting or microreinforcement that not only does not eliminate or reduce the porosity 4 of the mix, but on the contrary stabilises the different components, avoiding compacting of same at the bottom and also avoiding the porosity 4 being an element of weakness in the concrete.

From tests carried out it appears in fact that the concrete has a high strength. In particular it has been noticed that even in the cases of maximum porosity (24%-25%) in Examples 1 and 2, the resistance to combined compressive and bending stress is of about 50 kg/cm².

In addition, in an extraordinary manner, the draining power in a vertical direction of one dm² of concrete surface in Examples 1 and 2 is greater than eight litres of water per minute.

The invention achieves important advantages.

In fact a concrete material for paving is obtained that has optimal features under many points of view.

In addition to features of versatility, resistance to the applied efforts and to wear, etc. that are traditional by themselves for concrete materials and have already been mentioned in the introductory part, the new concrete has a reduced cost, due to the high content of big aggregate and to its relative lightness-in-weight, as a result of porosity.

In addition, due to the presence of the inner microreinforcement obtained with the glass yarn, the cracking and expansion phenomena are reduced.

Above all the metal reinforcement can be completely eliminated: the microreinforcement obtained with the glass yarn 5 withstands the tractive efforts and efficiently counteracts disintegration of the concrete.

The absence of a metal reinforcement also helps in an important manner in reducing the laying costs and times.

In addition, the concrete acquires a very high draining capability thanks to which the problems connected with the state of the roads pointed out in the introductory part are overcome.

The draining capability even higher than eight litres of water per minute on each square decimetre of surface is obtained as an effect of the different technical solutions described in detail.

In short, they are: arrangement of a high amount of big aggregate 2 of irregular shape and homogeneous dimensions, elimination of aggregates of intermediate particle size that can become compacted in an independent manner in the free spaces between the big aggregate, a low water/cement ratio, so as to obtain a viscous mixture 3 capable of spontaneously adhering to the big aggregate 2, leaving wide empty spaces, and the presence of glass yarn 5 connecting the different parts, thereby giving strength and preventing the parts from stratifying and partly thickening at the bottom.

The effect of preventing stratification obtained by the glass yarn 5 that encloses the big aggregate like a microreinforcing cage so as to avoid thickening of same at the bottom and also acting on the viscous mixture 3, is of the greatest importance for drainage, because thickening at the bottom and a nonhomogeneous porosity are sufficient to reduce or prevent draining.

It has been also noticed that in case of snow or ice the wide porosity gives rise to a kind of "stack effect", i.e. an air circulation towards the concrete surface is created that hinders adhesion or gripping of snow and ice to the concrete surface, which adhesion would cause slipping of the vehicles.

## Claims

1. A concrete material for paving, of the type including a mix (1) comprising at least cement, aggregate, water;
- **characterised in that** said cement is in an amount substantially included between two hundred and fifty and four hundred and fifty kilos per cubic metre and that the ratio by weight of the water to the cement is substantially maintained equal to or lower than 0.35;
- **in that** an at least major portion by weight of said aggregate consists of a big aggregate (2) obtained by crushing of stony material and having substantially homogeneous linear dimensions;
- and **in that** said mix comprises a glass yarn (5) of the AR type resisting to alkali and textured in the form of continuous filaments.

2. A concrete material as claimed in Claim 1, wherein said glass yarn (5) is provided in an amount lower than 50% by weight with respect to cement.

3. A concrete material as claimed in Claim 2, wherein said glass yarn (5) is provided in an amount substantially included between 5% and 10% by weight with respect to cement.

4. A concrete material as claimed in Claim 1, wherein said glass yarn (5) is defined by filaments having a diameter of substantially fourteen microns and a length substantially equal to or smaller than sixty millimetres.

5. A concrete material as claimed in Claim 1, wherein said glass yarn (5) consists of Cem-FIL® fibres produced by Saint-Gobain Vetrotex.

6. A concrete material as claimed in Claim 1, wherein said big aggregate (2) constitutes at least 80% by weight of said aggregate.

7. A concrete material as claimed in Claim 1, wherein said big aggregate (2) has maximum linear dimensions greater than five millimetres.

8. A concrete material as claimed in Claim 7, wherein said big aggregate (2) has maximum linear dimensions diverging less than 50% from a predetermined average value.

9. A concrete material as claimed in Claim 1, wherein said big aggregate (2) is selected from porphyries, limestone, basalts and the like and has maximum linear dimensions substantially included between eight and fifteen millimetres and alternatively between ten and sixteen millimetres.

10. A concrete material as claimed in Claim 1, wherein said big aggregate (2) is selected from siliceous materials such as quartz, tridymites, cristobalites and the like and has maximum linear dimensions substantially included between eight and twenty-five millimetres.

11. A concrete material as claimed in Claim 1, wherein said aggregate is made of said big aggregate (2) for substantially at least 80% by weight and of aggregates having linear dimensions substantially equal to or smaller than two millimetres for the remaining amount.

12. A concrete material as claimed in Claim 1, wherein said aggregate is made of said big aggregate (2) for substantially at least 80% by weight and of sand for the remaining amount.

13. A concrete material as claimed in claim 1, wherein said cement is in an amount included between three hundred and fifty and four hundred kilos per cubic metre.

14. A concrete material as claimed in Claim 1, wherein said water/cement ratio by weight is preferably included between 0.27 and 0.34.

15. A concrete material as claimed in Claim 1, wherein at least one fluidizing additive of the type having a pozzolanic activity, adapted to promote workability of said mix is present.

16. A concrete material as claimed in Claim 15, wherein said fluidizing additive is provided in an amount substantially equal to or lower than 10% by weight of the cement amount.

17. A concrete material as claimed in Claim 1, wherein for said mix (1) a value of wet density of the concrete material substantially included between 1900 and 2400 kilos for cubic metre is provided.

18. A paving **characterised in that** it is made with a concrete material as claimed in one or more of the preceding claims.

19. Use of a glass yarn of the AR type resisting to alkali, **characterised in that** it is inserted in a concrete material for paving.
